# EUROPÄISCHE PATENTSCHRIFT

(11) **EP 1 628 035 B1**
(45) Veröffentlichungstag und Bekanntmachung des Hinweises auf die Patenterteilung: **02.05.2007**
(21) Anmeldenummer: 05014264.5
(22) Anmeldetag: 30.06.2005
(51) Int. Cl.: F16F 1/04, F16F 1/06

(54) **Drehfederelement und Stellvorrichtung für Verbrennungskraftmaschinen**
Torsion spring and actuating device for internal combustion engines
Ressort à torsion et dispositif d'actionnement pour moteurs à combustion interne

(30) Priorität: 21.08.2004 DE 102004040632
(43) Veröffentlichungstag der Anmeldung: 22.02.2006
(73) Patentinhaber: Pierburg GmbH, 41460 Neuss (DE)
(72) Erfinder: Pluta, Manfred, 13435 Berlin (DE)
(74) Vertreter: Ter Smitten, Hans

(56) Entgegenhaltungen:
- DE-A1- 4 027 069
- JP-A- 50 014 963
- SU-A1- 1 305 466
- US-A- 3 030 783
- US-A- 4 576 762
- US-A- 4 901 396
- PATENT ABSTRACTS OF JAPAN Bd. 014, Nr. 510 (M-1045), 8. November 1990 (1990-11-08) -& JP 02 209636 A (TOTO HATSUJO KK), 21. August 1990 (1990-08-21)
- PATENT ABSTRACTS OF JAPAN Bd. 2003, Nr. 12, 5. Dezember 2003 (2003-12-05) -& JP 2003 262244 A (KEIHIN KINZOKU KOGYO KK), 19. September 2003 (2003-09-19)
- PATENT ABSTRACTS OF JAPAN Bd. 2000, Nr. 06, 22. September 2000 (2000-09-22) -& JP 2000 065111 A (ROLAND CORP), 3. März 2000 (2000-03-03)

## Beschreibung

Die Erfindung betrifft ein Drehfederelement nach dem Oberbegriff des Anspruchs 1 sowie eine Stellvorrichtung für Stellorgane in Verbrennungskraftmaschinen nach dem Oberbegriff des Anspruchs 2.

Derartige als Schraubenfeder ausgeführte Drehfederelemente sind ebenso bekannt wie Stellvorrichtungen, bei denen solche Drehfederelemente als Rückstellfeder dienen. Insbesondere wird dies bei Klappenantrieben benötigt, welche bei Ausfall des Antriebsmotors in eine Notlaufposition zurückgestellt werden müssen.

Bekannte Drehfederelemente dieser Art sind zylindrisch geformt und haben den Nachteil, dass sie einen relativ großen Bauraum benötigen um eine definierte Last bei der Drehung aufnehmen zu können. Bei Verkürzung eines derartigen Drehfederelementes wäre eine physische Überlastung der Feder die Folge, es sei denn es würden Federdrahtsorten mit höherer Biegespannung also deutlich teurerem Material verwendet. In einigen Anwendungen werden sogar Mehrdrahtfedern verwendet, da die zu übertragenden Federkräfte im vorhandenen Bauraum durch konventionelle, zylindrische Schraubenfedern nicht aufgebracht werden können.

Des weiteren sind beispielsweise aus der DE 30 37 394 C2 oder der DE 34 02 991 A1 Drehfedern in Form von Schraubenfedern bekannt, die ineinanderliegende aber nacheinander gewickelte Windungen aufweisen, wodurch die Gesamtfederlänge zwar gekürzt wird, jedoch eine unstetige Kennlinie entsteht.

Aus der US 6,220,586 B1 sind doppelt gewickelte Federn bekannt, deren erste und letzte Windung zum leichteren Einbau jeweils im Durchmesser kleiner ausgeführt sind als die im Mittelbereich der Feder angeordneten Windungen.

Aus der US 4,576,762 ein Drehfederelement bekannt, welches als Rückstellfeder einer Drosselklappe dient. Diese weist eine ballige Form auf, so dass nebeneinanderliegende Windungen einen unterschiedlichen Durchmesser aufweisen, wobei die Gesamteinbaufederlänge kürzer ist als die Summe der Durchmesser der Einzelwindungen. Ein derartiges Federelement weist im Vergleich zu bekannten Ausführungen eine verkürzte Baulänge auf.

Ein ähnlich aufgebautes Federelement mit wachsenden und schrumpfenden Windungsdurchmessern, welche jedoch jeweils in Abstand zueinander angeordnet sind, ist aus der JP 02-209 636 A bekannt.

Solche Drehfederelemente werden beispielsweise als Rückstellfedern in Stellvorrichtungen für Klappensysteme in Verbrennungskraftmaschinen verwendet. Da der hier vorhandene Bauraum stetig sinkt wird es zunehmend schwierig konventionelle Drehfederelemente in diesen Stellvorrichtungen unterzubringen.

Entsprechend ist es Aufgabe der Erfindung ein Drehfederelement zu entwickeln mit welchem auf deutlich eingeschränktem insbesondere axialen Bauraum eine hohe Federenergie gespeichert werden kann ohne teure Materialien zur Herstellung des Drehfederelementes verwenden zu müssen. Entsprechend soll eine flachere Kennlinie des Federelementes verwirklicht werden.

Diese Aufgabe wird durch den kennzeichnenden Teil des Hauptanspruchs gelöst. Daraus folgt, dass sich die einzelnen Windungen zumindest teilweise überschneiden, wodurch eine axiale Verkürzung des Drehfederelementes bei flacherer Kennlinie erreicht wird.

Die Windungen kleineren Durchmessers sind radial innerhalb von Windungen größeren Durchmessers angeordnet, so dass die Anzahl an Windungen und somit die mögliche zu speichernde Energie in der Feder weiter vergrößert wird und der zur Verfügung stehende axiale Bauraum optimal genutzt werden kann. Da auf diese Weise die vorhandene Federdrahtlänge vervielfacht werden kann wächst die zulässige Biegespannung und Zugfestigkeit entsprechend. Alternativ können auch kostengünstigere Drahtsorten verwendet werden.

Derartige Drehfederelemente sind einfach und kostengünstig herstellbar und optimieren das Verhältnis der vorhanden Federdrahtlänge zum vorhandenen Bauraum. Eine im wesentlichen lineare Kennlinie bleibt verwirklicht, da im wesentlichen lediglich die Achsen zueinander verschoben sind.

Vorzugsweise wird ein derartiges Drehfederelement in einer Stellvorrichtung als Rückstellfeder verwendet, so dass der benötigte Bauraum in der Stellvorrichtung reduziert werden kann.

Derartige Drehfederelemente verfügen somit im Vergleich zu bekannten Ausführungen über eine verbesserte Kennlinie oder können aus kostengünstigeren Drahtsorten hergestellt werden, wobei gleichzeitig der benötigte Bauraum reduziert wird.

Ein Drehfederelement gemäß des Standes der Technik sowie ein erfindungsgemäßes Drehfederelement sind in den Zeichnungen dargestellt und werden nachfolgend beschrieben.
Figur 1 zeigt eine perspektivische Ansicht eines balligen Drehfederelmentes gemäß des Standes der Technik.
Figur 2 zeigt eine Seitenansicht des Drehfederelementes aus Figur 1 in geschnittener Darstellung.
Figur 3 zeigt eine Seitenansicht eines erfindungsgemäßen Drehfederelementes in geschnittener Darstellung.
Figur 4 zeigt eine perspektivische Ansicht des erfindungsgemäßen Drehfederelementes aus Figur 3.

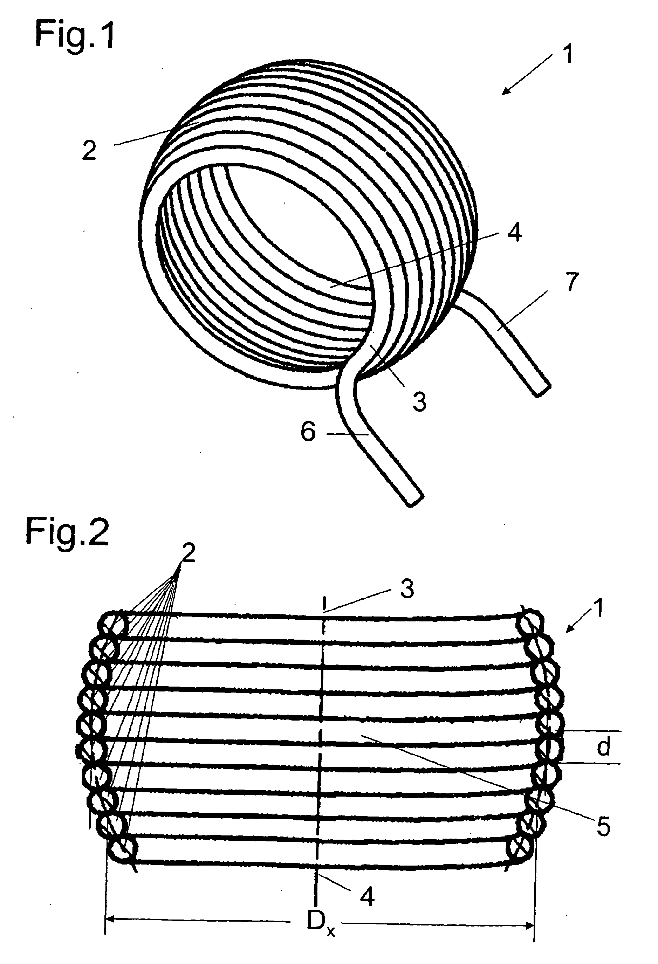

Das in den Figuren 1 und 2 dargestellte Drehfederelement 1 besteht aus insgesamt zehn Windungen 2. Wie insbesondere aus Figur 2 ersichtlich, weisen die Windungen 2 an den axialen Enden 3, 4 der Schraubenfeder 1 einen kleineren Durchmesser Dₓ auf, als die in einer axial in der Federmitte 5 angeordneten Windungen 2. Somit entsteht in axialer Richtung eine Überlappung der einzelnen Windungen 2, so dass die gesamte Federlänge kleiner ist als die Summe der einzelnen Federdrahtdurchmesser d jeder Windung 2. Entsprechend wird die axiale Baulänge im Vergleich zu einer zylindrisch ausgeführten Schraubenfeder verringert.

Die beiden Federdrahtenden sind jeweils in im wesentlichen radialer Richtung als Federschenkel 6, 7 von der Federachse wegweisend ausgebildet. Somit können diese Federschenkel 6, 7 in einer Stellvorrichtung gegen entsprechend ausgebildete Anschläge anliegen und gegeneinander verdreht werden, wobei ein erster Federschenkel 6 beispielsweise gegen einen festen Anschlag in einem Gehäuse einer Stellvorrichtung anliegt und der zweite Federschenkel 7 gegen einen mit einer Stellwelle beweglichen Anschlag anliegt, so dass bei Bewegung der Welle Energie im Drehfederelement 1 gespeichert wird, die durch die Spannung der Feder 1 eine Rückstellkraft erzeugt, welche zu einem Rückdrehen der Feder 1 bei Ausschalten eines entsprechend angesteuerten Elektromotors führt.

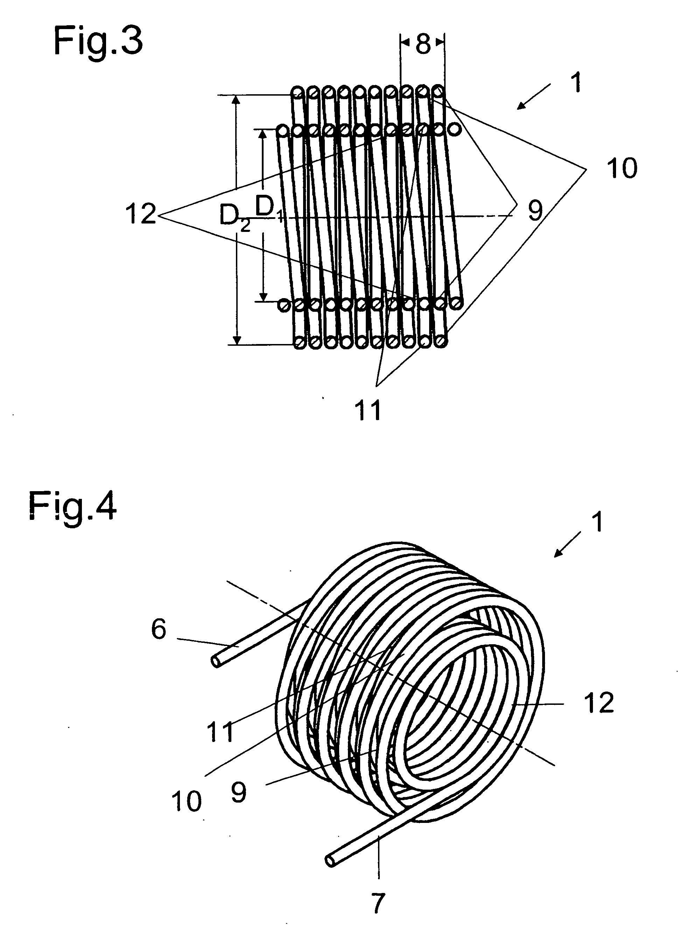

Der Federdraht des in den Figuren 3 und 4 dargestellten erfindungsgemäßen Drehfederelementes 1 ist im Vergleich zu dem vorbeschriebenen derart gewickelt, das mehrere Federabschnitte 8 axial hintereinander angeordnet sind, wobei jeder Federabschnitt 8 aus einer ersten im wesentlichen spiralförmig wachsenden Windung 9, einer zweiten Windung 10 mit großem konstanten Durchmesser D₂, einer dritten Windung 11 mit spiralförmig schrumpfendem Durchmesser und einer vierten Windung 12 mit kleinerem konstanten Durchmesser D₁ besteht. Die Federschenkel 6, 7 zum Angriff der Kräfte sind in diesem Ausführungsbeispiel im wesentlichen tangential zu den Windungen 12 des Drehfederelementes 1 ausgebildet. Auf diese Weise wird die doppelte Federdrahtlänge im Vergleich zu bekannten Drehfedern auf gleichem Bauraum verwirklicht, ohne Überschneidungsprobleme im spiralförmigen Bereich zu erhalten.

Es wird deutlich, dass derartig ausgeführte Drehfederelemente im Vergleich zu bekannten zylindrischen Schraubenfedern einen deutlich verringerten Bauraum insbesondere in axialer Richtung benötigen, da eine höhere Anzahl an Windungen in einem vorgegebenen Bauraum untergebracht werden kann. Es entsteht somit bei gleicher Federlänge eine Verbesserung der Federdauerfestigkeit, so dass die zulässige Biegespannung erhöht werden kann. Eine derartige Drehfeder besitzt eine flachere und somit bessere Kennlinie im Vergleich zu bekannten Federelementen.

Die Erfindung ist nicht auf die dargestellten Ausführungsbeispiele beschränkt. Auch sinusoide, kegelige oder doppelkegelige u.a. Formen können verwirklicht werden.

## Patentansprüche

1. Drehfederelement, welches als Schraubenfeder ausgeführt ist und zwei Federdrahtenden aufweist, welche als im wesentlichen tangential oder radial zu Windungen des Drehfederelementes verlaufende Federschenkel ausgeführt sind, wobei das Drehfederelement (1) Windungen (2, 9, 10, 11, 12) aufweist, welche unterschiedliche Durchmesser (Dₓ) aufweisen, wobei die gesamte axiale Länge des Drehfederelementes (1) kleiner ist als die Summe der Federdrahtdurchmesser (d) aller einzelnen Windungen (2, 9, 10, 11, 12), wobei jede Windung (2) der Schraubenfeder (1) einen anderen Durchmesser (Dₓ) aufweist als eine folgende Windung (2) der Schraubenfeder (1) und wobei Windungen (12) kleineren Durchmessers (D₁) radial innerhalb von Windungen (10) größeren Durchmessers (D₂) angeordnet sind, **dadurch gekennzeichnet, dass** das Drehfederelement (1) mehrere axial hintereinanderliegende Federabschnitte (8) aufweist, wobei jeder Federabschnitt (8) vier Windungen (9, 10, 11, 12) aufweist, wovon jeweils eine erste Windung (9) in ihrem Durchmesser spiralförmig wachsend, eine zweite Windung (10) mit einem konstanten größeren Durchmesser, eine dritte Windung (11) in ihrem Durchmesser spiralförmig schrumpfend und eine vierte Windung (12) mit einem konstanten kleineren Durchmesser ausgebildet ist.

2. Stellvorrichtung für Stellorgane in Verbrennungskraftmaschinen mit einem Gehäuse in dem ein Antriebsmotor, über welchen zumindest mittelbar eine Abtriebswelle in eine Drehbewegung versetzbar ist angeordnet ist, wobei die Stellvorrichtung mit einem Drehfederelement derart gekoppelt ist, dass zwei Federschenkel des Drehfederelementes gegen zwei Anschläge anliegen, wovon ein erster mit der Welle drehbar und ein zweiter fest in einem Gehäuse der Stellvorrichtung angeordnet ist, so dass die Welle über die bei Drehung der Welle im Drehfederelement gespeicherte Energie in eine vordefinierte Ausgangsstellung rückstellbar ist, **dadurch gekennzeichnet, dass** das Drehfederelement (1) ein Drehfederelement (1) nach Anspruch 1 ist.

## Claims

1. A torsion spring element, which is constructed as a helical spring and has two spring wire ends which are constructed as spring legs extending substantially tangentially or radially to turns of the torsion spring element, the torsion spring element (1) having turns (2, 9, 10, 11, 12) which have different diameters (Dₓ), the entire axial length of the torsion spring element (1) being smaller than the sum of the spring wire diameters (d) of all individual turns (2, 9, 10, 11, 12), each turn (2) of the helical spring (1) having a different diameter (Dₓ) from a following turn (2) of the helical spring (1) and turns (12) with smaller diameters (D₁) being arranged radially inside turns (10) with larger diameters (D₂), **characterised in that** the torsion spring element (1) has a plurality of spring portions (8) located axially behind one another, each spring portion (8) having four turns (9, 10, 11, 12) of which a respective first turn (9) is constructed to increase spirally in its diameter, a second turn (10) is constructed with a constant larger diameter, a third turn (11) is constructed to decrease spirally in its diameter and a fourth turn (12) is constructed with a constant smaller diameter.

2. A control device for control members in internal combustion engines, having a housing in which there is arranged a drive motor by way of which an output shaft may be at least indirectly set in rotary motion, the control device being coupled to a torsion spring element in such a way that two spring legs of the torsion spring element abut against two stops of which a first is arranged to be rotatable with the shaft and a second is fixedly arranged in a housing of the control device so that the shaft may be reset in a pre-defined starting position by way of the energy stored in the torsion spring element upon rotation of the shaft, **characterised in that** the torsion spring clement (1) is a torsion spring element (1) according to Claim 1.

## Revendications

1. Elément formant ressort de torsion, réalisé sous la forme d'un ressort hélicoïdal, et qui a deux extrémités de fil métallique qui sont réalisées en tant que branches de ressort s'étendant principalement tangentiellement ou radialement aux spires de l'élément formant ressort de torsion, dans lequel l'élément formant ressort de torsion (1) comporte des spires (2, 9, 10, 11, 12), lesquelles ont des diamètres (Dₓ) différents, dans lequel la longueur axiale totale de l'élément formant ressort de torsion (1) est plus petite que la somme des diamètres de fil métallique (d) de toutes les spires individuelles (2, 9, 10, 11, 12), dans lequel chaque spire (2) du ressort hélicoïdal (1) a un diamètre (Dₓ) différent de celui de la spire (2) suivante du ressort hélicoïdal (1), et dans lequel les spires (12) d'un diamètre (D₁) plus petit sont agencées radialement à l'intérieur des spires (10) d'un diamètre (D₂) plus grand, **caractérisé en ce que** l'élément formant ressort de torsion (1) à plusieurs tronçons de ressort (8) situés axialement les uns derrière les autres, dans lequel chaque tronçon de ressort (8) comporte quatre spires (9, 10, 11, 12), parmi lesquelles sont formées respectivement une première spire (9) dont le diamètre croît en spirale, une deuxième spire (10) avec un plus grand diamètre constant, une troisième spire (11) dont le diamètre diminue en spirale, et une quatrième spire (12) avec un plus petit diamètre constant.

2. Appareil de régulation pour des actionneurs de machine à combustion interne, ayant un boîtier dans lequel est disposé un moteur d'entraînement par lequel un arbre de transmission peut être déplacé dans un mouvement rotatif, dans lequel l'appareil de régulation est couplé à un élément formant ressort de torsion de sorte que deux branches de ressort de l'élément formant ressort de torsion appuient contre deux butées, une première pouvant pivoter avec l'arbre et une seconde étant disposée de manière fixe dans le boîtier de l'appareil de régulation, de sorte que l'arbre peut être rappelé dans une position initiale prédéfinie par l'intermédiaire de l'énergie stockée dans l'élément formant ressort de torsion lors de la rotation de l'arbre, **caractérisé en ce que** l'élément formant ressort de torsion (1) est un élément formant ressort de torsion (1) selon la revendication (1).
